# EUROPEAN PATENT APPLICATION

(11) **EP 1 763 042 A1**
(43) Date of publication of application: **14.03.2007**
(21) Application number: 05737320.1
(22) Date of filing: 26.04.2005
(51) Int. Cl.: H01F 3/02, H01F 1/147, H02K 1/17

(54) **MAGNETIC CIRCUIT WITH EXCELLENT CORROSION RESISTANCE, AND VOICE COIL MOTOR OR ACTUATOR**

(30) Priority: 13.05.2004 JP 2004143624
(71) Applicant: Shin-Etsu Chemical Company, Ltd., Tokyo 100-0004 (JP)
(72) Inventor: SHIMAO, Masanobu;, ome, Echizen-shi, Fukui 915-8515 (JP); MINOWA, Takehisa;, ome, Echizen-shi, Fukui 915-8515 (JP); HASEGAWA, Takayuki;, ome, Echizen-shi, Fukui 915-8515 (JP)
(74) Representative: Muttock, Neil John
(86) International application number: PCT/JP2005/007881
(87) International publication number: WO 2005/112053

(57) **Abstract**

Provided are a magnetic circuit capable of being manufactured inexpensively due to omission of formation of a corrosion-resistant metallic surface film as well as a voice coil motor or an actuator by utilizing the same. The magnetic circuit comprises yoke members prepared from a plate material of 0.1 mm to 5 mm thickness of a martensite-type, ferrite-type or precipitation-hardening stainless steel material or a Cr-based heat-resistant steel material containing 0.0001-1% (% by mass, the same hereinbelow) of C, 0.0001-5% of Si, 0.001-2% of Mn, 0.0001-0.1% of P, 0.0001-0.2% of S, 0.0001-5% of Al, 0.0001-0.1% of O, 0,0001-0.1% of N, 0.0001-1% of Ni and 10.5-30% of Cr together with at least one alloying element selected from Ti, Co, Cu, Zr, Nb, V, Mo, W, Ta and B as the additive elements in a total amount of 0.0001-5%, the balance being Fe.

## Description

### Technological field

The present invention relates to an inexpensive magnetic circuit having high corrosion resistance and suitable for use in a magnetic recording device such as hard discs and optical pickup device as well as in a voice coil motor and an actuator.

### Background technology

Hard discs are used with arrangement of a medium having a magnetic recording film formed on a substrate, a spindle motor for driving the medium at a requisite revolution, a magnetic head for writing and reading the recorded contents, a voice coil motor for driving the same, a control unit and others. The magnetic circuit of the voice coil motor is constituted of permanent magnets for generating magnetic flux and yokes connecting the same and used as an actuator for driving the head. In the magnetic circuit for driving CDs and DVDs, permanent magnets for generating magnetic flux and yokes connecting the same are used as an actuator for driving the lens in the pickup. Due to the violent competition for price reduction among producers in recent years, further cost reduction is required also for voice coil motors and actuators.

In the parts used therein, the first requirement is cleanness free from the problem of dust generation. In the iron-made parts under a risk of ready rusting such as yokes and the like, the rust as formed works as particle contamination which contaminates hard discs and heads and lenses for optical pickups so that a usual measure is to use them after a variety of corrosion-resistant surface treatments. Furthermore, each of the parts is manufactured under a strict management of cleanness in order to prevent crashing between the magnetic head and the medium and contamination of the lens even though the cost of the parts is unavoidably increased due to the requirement for cleanness of the manufacturing process.

In consideration of the requirement for cost reduction, the yoke members of the magnetic circuit constituting the voice coil motors or actuators are manufactured by using an inexpensive rolled plate of general-purpose steels such as SPCC, SPCD, SPCE and the like. While these rolled plates of general-purpose steels have merits in respects of their good workability for punching, bending and the like and inexpensiveness, rust formation thereon can hardly be prevented as a rolled plate of a general-purpose steel. In order to solve the aforementioned problems, it is practiced that working in a press machine and the like is followed by expensive electroless Ni-P plating to prevent rust formation resulting in an unavoidable increase of the overall cost.

As a trend in recent years, computers are required to have a decreased size and weight in consideration of good portability. To comply with this trend, magnetic recording devices and optical pickup devices are also under shift toward compactness and flatness. Furthermore, this shift toward compactness and flatness is extending to the parts of the magnetic circuit such as permanent magnets and yoke members. It is conventional heretofore that compactness and flatness of the magnetic circuits are accomplished by compensation of the decrease in the magnetic flux density within the air gap as a result of the decrease in the volume by means of the higher magnetic flux density of high-performance magnets.

In contrast to the year-by-year increasing trend of the magnetic flux density generated by high-performance magnets available, rolled steel plates such as SPCC, SPCD, SPCE and the like are used for yoke materials as before, the saturation magnetization of the yoke materials cannot be increased corresponding to the improvement of the magnetic flux density of the magnets. The thickness of the yokes is also under limitation due to the aforementioned requirement for compactness and flatness of the apparatus as a whole so that magnetic saturation can hardly be avoided in a partial VCM magnetic circuit resulting, after all, in inefficient utilization of the magnetic flux poorly conducted from the permanent magnets having a high magnetic flux density. Consequently, the magnetic circuit is partly saturated at a halfway thereof or leakage of the magnetic flux is caused. Such a leakage of the magnetic flux not only decreases the magnetic flux density in the airgap of the magnetic circuit but also affects the magnetic recording medium and the control instruments. The leakage of the magnetic flux from the VCM magnetic circuit is under a limitation so that leakage of the magnetic flux must not exceed the specified upper limit. See the following patent documents (1) to (4):
(1) Japanese Patent Kokai 2002-080945;
(2) Japanese Patent Kokai 2002-080946;
(3) Japanese Patent Kokai 2002-080947; and
(4) Japanese Patent Kokai 2003-049251.

### Problems to be solved by the invention

Accordingly, it is eagerly desired to develop a compact and flat yoke and a magnetic circuit which fully utilize the characteristic feature of high magnetic flux densities possessed by a permanent magnet and which can be manufactured at a low cost. The present invention has been completed to comply with the aforementioned desire for providing a magnetic circuit and a voice coil motor or an actuator in which formation of a corrosion-resistant metallic surface film can be omitted by using a material having a high magnetic flux density and excellent corrosion resistance and capable of being manufactured at a low cost.

### Means to solve the problems

The magnetic circuit of the present invention is a magnetic circuit constituted of a yoke member prepared of a plate material which is a plate material of a martensite-type, ferrite-type or precipitation-hardening stainless steel or a Cr-based heat-resistant steel containing 0.0001-2% by mass of C, 0.0001-5% by mass of Si, 0.001-2% by mass of Mn, 0.0001-0.1% by mass of P, 0.0001-0.2% by mass of S, 0.0001-5% by mass of Al, 0.001-0.1 % by mass of O, 0.0001-0.1 % by mass of N, 0.0001-1 % by mass of Ni and 10.5-30% by mass of Cr, together with further additive elements as the alloying elements including at least one kind selected from the group consisting of Ti, Co, Cu, Zr, Nb, V, Mo, W, Ta and B in a total amount of 0.0001-5% by mass, the balance being Fe excepting for other practically unavoidable impurities having a plate thickness of 0.1 mm - 5 mm without being provided with a corrosion-resistant metallic surface film on the surface, of which the saturation magnetic flux density is 1.3-2.3 Tesla, maximum relative magnetic permeability of 200-22000, coercive force of 20-2000 A/m, as combined with Nd/Fe/B-based magnets after a surface treatment, the aforementioned Nd/Fe/B-based magnets being magnetized in monopolar, dipolar or quadripolar, 1, 2 or 4 of the aforementioned Nd/Fe/B-based magnets being adhesively bonded to the aforementioned yoke members to form adhesion-bonded magnet/yoke composites, the aforementioned yoke members and the adhesion-bonded composite body or a pair of the composite members having the same numbers of the magnets being oppositely disposed, the amount of magnetic flux concentratedly flowing within the opposite gaps formed between the yoke members and the adhesion-bonded composite members or within the opposite gap formed between a pair of the composite members and the ratios of the leakage of the magnetic flux to the magnetic flux in the opposite gaps not exceeding 50000 ppm and the strengths of the magnetic field within the opposite gaps and the yoke members being free from influences. The voice coil motor or the actuator of the present invention can be prepared by using the above-defined magnetic circuit.

### Advantages of the invention

According to the present invention, the corrosion resistance of the aforementioned plate material of the iron alloy is so excellent that yoke members prepared thereof need not be provided, as in conventional yokes, with a corrosion-resistant metallic surface film formed from a metal such as Ni, Cu, Sn, Au, Pt, Zn, Fe, Co, Al, Cr, Cd, Ag and the like or an alloy containing at least 20% by mass of these metals. When a plate material of the aforementioned iron alloy is used, namely, it is now possible to omit formation of a corrosion-resistant metallic surface film while maintaining the high characteristics of the magnetic circuit enabling preparation of an inexpensive magnetic circuit and a voice coil motor or an actuator. In particular, admixing of Cr to the iron alloy has an effect of further enhancing the corrosion resistance unnecessitating the surface treatment to accomplish inexpensive manufacturing.

### Brief description of the drawing

Figure 1 is a schematic perspective view showing the VCM magnetic circuit in the first embodiment of the present invention.
Figure 2 is a schematic perspective view showing the VCM magnetic circuit in the second embodiment of the present invention.
Figure 3 is a schematic perspective view showing the VCM magnetic circuit as the third embodiment of the present invention.

### Best mode for practicing the invention

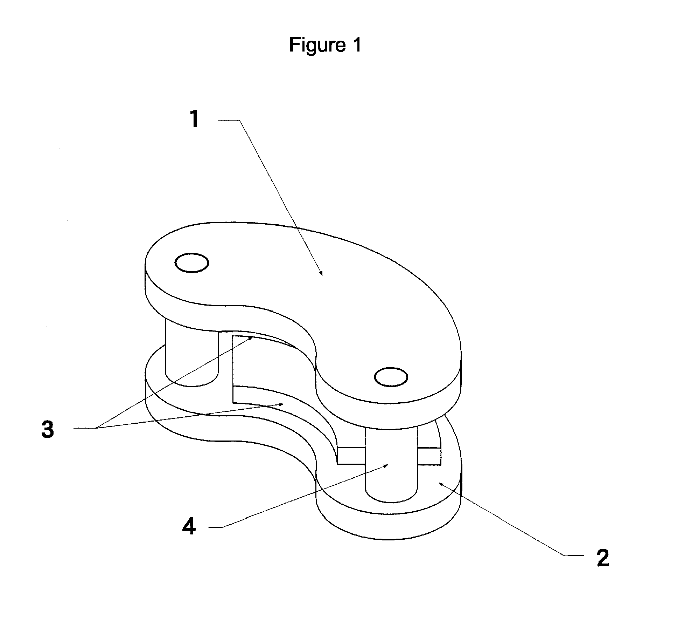

In Figure 1, 1 is the upper yoke constituting the magnetic circuit, 2 is the lower yoke constituting the magnetic circuit and 3 is the permanent magnet generating the magnetic flux, one, two or four thereof being disposed. 4 is a connecting column which connects the upper and lower yokes jointly constituting the magnetic circuit. In the VCM magnetic circuit as the first embodiment of the present invention shown in Figure 1, two yokes are provided at the upper and lower positions and they are connected together with the connecting columns.

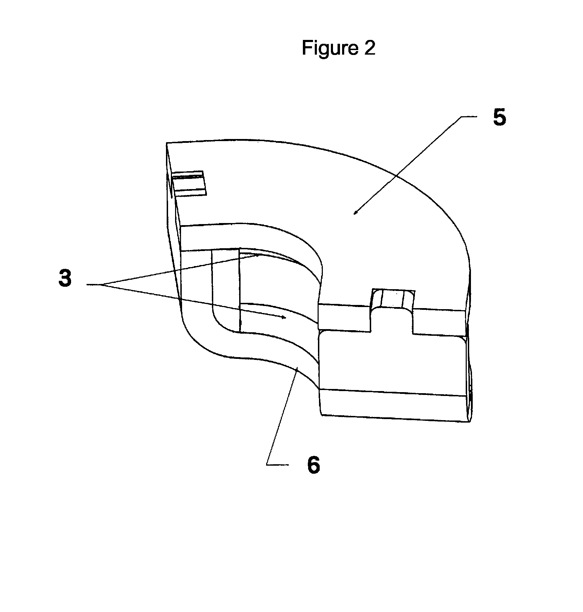

In Figure 2, 5 is the upper yoke constituting the magnetic circuit, 6 is the lower yoke and 3 is the permanent magnet generating magnetic flux. In the VCM magnetic circuit as the second embodiment, the lower yoke 6 is subjected to a bending work to be formed in such a fashion as to also serve as the connecting part.

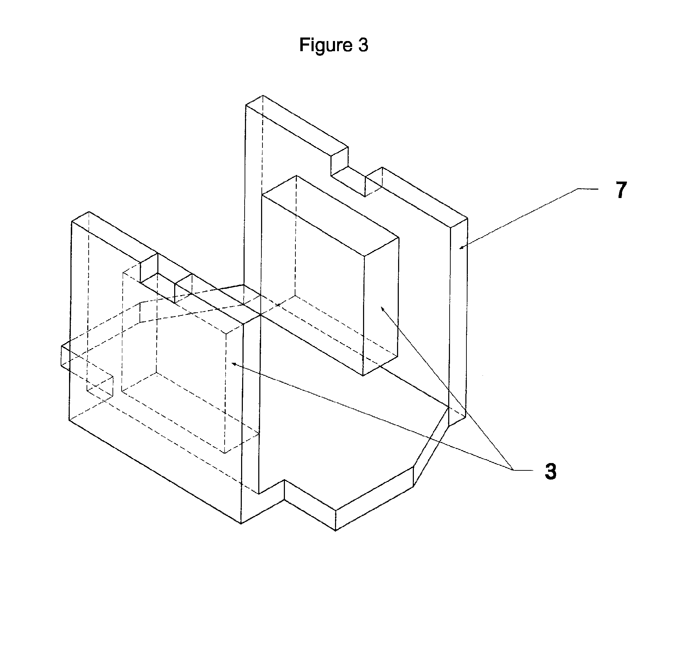

In Figure 3, 7 is the yoke and 3 is the permanent magnet generating magnetic flux. In the magnetic circuit in the third embodiment of the present invention shown in Figure 3, the yoke 7 is subjected to a bending work to be formed in such a fashion as to serve also as the connecting part.

In the magnetic circuit of the present invention, as is described above, the yokes are prepared from a plate material of a martensite-type, ferrite-type or precipitation-hardening stainless steel or a Cr-based heat-resistant steel containing each in a specified amount of C, Si, Mn, P, S, Al, O or N together with, preferably, Cr in a specified amount and at least one kind of Ti, Co, Cu, Zr, Nb, Mo, V, Ni, W, Ta and B in a specified amount.

Thus, the inventors have conducted extensive studies to accomplish the above described objects. The result of the tests for the elements capable of improving the corrosion resistance is that steels such as SPCC and the like cause formation of scale by accelerated oxidation when heated in air. Namely, while FeO and Fe₃O₄ as a metal-deficient n-type semiconductor grow by the migration of Fe⁺⁺, Fe₂O₃ as a metal-excess p-type semiconductor grows by the migration of O so that oxygen permeates through the oxide layer resulting in acceleration of oxidation of iron beneath the oxide layer. In order not to promote oxidation, the oxide layer is required to be so dense and free from formation of cracks with good adhesion to exhibit inhibition against intrusion and diffusion of oxygen toward the interior.

Since susceptibility of Al, Cr and Si to oxidation is higher than Fe, they are selectively oxidized before Fe forming a thin but dense surface film of Al₂O₃, Cr₂O₃ or SiO₂ which inhibits progress of oxidation. To say more particularly, Al and Cr form a composite oxide of FeO·Al₂O₃ or FeO·Cr₂O₃ and Si forms a composite oxide of 2FeO·SiO₂. The oxidation resistance is lost when the volume of the thus formed oxide layer is too small to effect complete coverage of the surface while, when the volume is too large, the oxidation resistance is lost likewise due to bulging or cracking of the oxide layer. Best results could be obtained when the surface is completely covered with a dense oxide layer of an appropriate volume.

Further, studies were undertaken for the elements which may have an influence to cause a decrease in the magnetic flux density among the constituent ingredients of the SPCC material and others. Although C, Al, Si, P, S and Mn have no magnetic moment against iron, their magnetic moments differ from that of the iron matrix so that a phenomenon arises due to presence of these elements that the magnetic moment of surrounding iron is caused. P and S, in particular, have an adverse influence in respect of the corrosion resistance in addition to the decrease in the magnetic flux density. It is, however, disadvantageous in respect of the production costs of the base materials to attempt more than necessary decrease of these elements and, in respect of the performance, they can be contained without problems if ranges of small amounts are not exceeded.

In view of the above standpoints, the yokes of the present invention for use in the magnetic circuit of voice coil motors should contain 0.0001-2% by mass of C; 0.0001-5% by mass of Si; 0.001-2% by mass of Mn; 0.0001-0.1% by mass of P; 0.0001-0.2% by mass of S; 0.0001-5% by mass of Al; and 0.0001-1% by mass of Ni, the balance being Fe, or, more preferably, 0.0005-1.2% by mass or, in particular, 0.001-0.5% by mass of C; 0.0005-3.5% by mass or, in particular, 0.001-1.0% by mass of Si; 0.001-1.5% by mass or, in particular, 0.01-1.0% by mass of Mn; 0.0001-0.05% by mass or, in particular, 0.001-0.05% by mass of P; 0.0001-0.15% by mass or, in particular, 0.001-0.1% by mass of S; 0.0005-4% by mass or, in particular, 0.01-1.0% by mass of Al; and 0.0005-1.0% by mass or, in particular, 0.001-0.6% by mass of Ni.

O and N also have influences on the magnetic properties so that they should be contained preferably in the ranges of 0.0001-0.1% by mass of O and 0.0001-0.1% by mass of N and, if falling within these ranges, no particular decrease is caused in the saturation magnetic flux density. More preferably, their contents should be 0.0005-0.09% by mass or, in particular, 0.005-0.08% by mass of O and 0.0005-0.10% by mass or, in particular, 0.0005-0.05% by mass of N.

The content of Cr should be 10.5-30% by mass. In particular, it is known that the spontaneous magnetic moment is linearly decreased thereby in Fe-Cr alloys so that addition in a large amount leads to a decrease in the magnetic flux. In these alloys of 31-80% by mass composition, annealing causes a great change in the physical properties. For example, annealing at 475°C mechanically increases the hardness and brittleness so that a great decrease is caused in the plasticity workability such as cutting/grinding and punching works and also in the corrosion resistance together with the brittleness. When heated at about 700 °C prolongedly, the σ-phase precipitates at the grain boundaries to decrease the resistance against grain boundary corrosion and the mechanical strengths. Accordingly the range of Cr should not exceed 31% by mass. The amount of Cr can rather be small enough because the iron alloy plate material for use in the magnetic circuit of the inventive voice coil motor and the yokes in the magnetic circuit of the voice coil motor are employed in an environment which is quite different from the environment where stainless steels are usually employed such as salty environments or environments in the presence of chemicals. The content thereof should preferably be 10.5-21% by mass in respect of the magnetic properties.

The results of the above described studies have led to a conclusion that it would be the most efficient to use, as a material satisfying these requirements, stainless steels or Cr-based heat-resistant steels. The cost can be kept low by using a rolled sheet of a stainless steel usually under production. Grades of suitable steels include SUS 403, SUS 405, SUS 409, SUS 410, SUS 414, SUS 416, SUS 420, SUS 429, SUS 430, SUS 431, SUS 434, SUS 436, SUS 440, SUS 444, SUS 446, and SUS 630 series among the martensite-type and ferrite-type or precipitation-hardening stainless steels and SUH 1, SUH 3, SUH 4, SUH 11, SUH 13, SUH 21, SUH 409, SUH 600 and SUH 616 among the heat-resistant steels. The grades with an additional symbols of L or LX usually annexed to the right ends of these grade names have a meaning that the content of carbon or contents of carbon and nitrogen are low while low contents of these elements are desirable in respect of an increase in the coercive force and little influences of decreasing the magnetic flux density and magnetic permeability. The additional symbols of F and Se usually annexed to the right ends of the above grade names indicate addition of S so as to be suitable when good grindability is desired. Austenite-type stainless steels are not suitable for use in magnetic circuits because they are non-magnetic.

At least one kind of the additive elements selected from Ti, Zr, Nb, Mo, V, W and Ta causes a decrease in the magnetic flux density when the element forms a solid solution in the ferrite phase of the material but form intermetallic compounds with the unavoidably intermixing C, O and N in the form of carbides, oxides and nitrides. These precipitates are precipitated finely and uniformly within the alloy texture to serve for prevention of migration of dislocations in the course of plasticity working. Accordingly, the alloy is freed from excessively high ductility to exhibit an effect of decreasing occurrence of burrs at the cross section subjected to shearing in the punching works of the plate material. When certain elements capable of immobilizing C, O and N are contained, no sensitization is caused even by quenching from the annealing temperature hardly leading to coarsening of the crystalline grain size to increase the resistance against grain boundary corrosion.

As is the case in stainless steels, Mo and V exhibit an effect of improving the corrosion resistance of iron alloy plate materials. When the content of carbon is low, strong embrittlement is caused by annealing at 440-540°C together with secondary hardening. This annealing embrittlement, however, causes an improvement in the resistance against tempering softness due to the carbon traps by the addition of these elements. W, Ta and B exhibit an effect of improving the rolling workability of plate materials contributing to a decrease in the working cost. On the other hand, addition of these additive elements undesirably decreases the saturation magnetization so that the total amount of addition of these elements should be limited not to exceed 5% by mass. Preferably, the total amount of these elements should be in the range of 0.0001 to 5% by mass. While the balance to the above be iron, it is preferable that the content of iron in the iron alloy is at least 50% by mass or, more preferably, at least 80% by mass.

Furthermore, the present invention is characterized by the saturation magnetic flux density of the iron alloy which should be in the range of 1.3 to 2.3 Tesla. The advantages of a high saturation magnetic flux density are cancelled when the maximum relative magnetic permeability is too low or when the coercive force is too large by an undue increase in the magnetic resistance of the magnetic circuit and a decrease of the magnetic flux density in the airgap. In this regard, it is desirable that the maximum relative magnetic permeability is in the range of 2000 to 22000 and the coercive force is in the range of 20 A/m to 2000 A/m. It is more preferable that, with the proviso that the saturation magnetic flux density is 1.5-2.3 Tesla or, most preferably, 1.7-2.3 Tesla, the maximum relative magnetic permeability is 300-22000 or, most preferably, 400-22000 and the coercive force is 20-1600 A/m or, most preferably, 20-1000 A/m.

When the hardness of the yoke material is too high, troubles are sometimes encountered in the punching and bending works due to the insufficient capability of the press machines or due to the shortened durability life of the metal molds under an excessively large load. In this regard, it is preferable that the yoke material has a Rockwell hardness not exceeding HRB 100 or, more preferably, not exceeding HRB 90. Among the martensite-type stainless steels, preference of the grades is in the increasing order of SUS 431 <(SUS 416, 420)<(SUS 403, 410) in respect of workability for punching, stamp carving, forging and the like. In the ferrite-type stainless steels, Cr serves as a solid solution-strengthening element and the low-Cr ferrite stainless steels, in particular, have a low strength and excellent ductility to be suitable for drawing and extending works. The low-Cr and low-C stainless steels with addition of Ti, SUH 409L has the highest softness and high ductility and is excellent for hammering, embossing, bending and the like.

While the contents of the alloying elements can be adjusted within the desired ranges by way of the base materials and the steelmaking process, the continuous casting process is preferred in respect of the productivity and product quality and the vacuum melting process is suitable for small-lot production. In order to obtain a specified thickness of the steel plate after casting, the hot rolling process and cold rolling process are both applicable. The thus obtained iron alloy plate material is then worked into the desired form of the yoke material by means of the plastic deformation works such as punching, hammering, boring, bending, embossing and the like by using a machine press, oil hydraulic press or fine blanking press followed by finishing such as deburring, chamfering, mechanical polishing, chemical polishing, electrolytic polishing and the like to give a yoke material for use in voice coil motors having a thickness of 0.1 to 5 mm or, preferably, 0.5 to 4.5 mm.

When the yoke material has a thickness smaller than 0.1 mm, no substantial improvement can be accomplished in the magnetic properties of the magnetic circuit even by certain improvements in the saturation magnetization due to the unduly small thickness of the plate material while, when the plate thickness exceeds 5 mm, no problems are caused by the saturation of the magnetic circuit due to the sufficiently large thickness of the plate material. Accordingly, the designing of the plate thickness must be undertaken by making reference to the magnetic properties of the plate material. In that case, the permissible range of the proportion between the magnetic flux where the amount of magnetic flux within the opposite gaps is made the largest and the leakage of magnetic flux at the positions of the outer periphery of the magnetic disc medium, control circuit and magnetic head does not exceed 50000 ppm. When this proportion is larger than 50000 ppm, the leakage of magnetic flux from the plate material are so large that adverse influences are caused on the surroundings. Because of the limitation on the magnetic flux by the apparatus as a whole, the proportion should not exceed 50000 ppm or, preferably, should not exceed 30000 ppm or, more preferably, should not exceed 25000 ppm.

When the amounts of magnetic flux within the opposite gaps and the magnetic field within the plate material of the yoke are under variations the magnets and the yoke plate materials are heated by generation of eddy currents leading to an undesirable problem relative to the stability of the amounts of magnetic flux due to the changes in the temperature thereof so that it is essential that the amounts of magnetic flux within the opposite gaps and the magnetic field within the plate material of yokes are free from variations. In the present invention, accordingly, the leakage of magnetic flux is decreased by using, as the yoke material, a material having excellent corrosion resistance and a high saturation magnetic flux density equivalent to that of the SPCC materials and a high maximum relative magnetic permeability.

Deburring of burrs occurring in the yoke materials is conducted by means of explosive combustion, barrel polishing and the like. Finishing is conducted by mechanical polishing means such as buff polishing, chemical polishing or electrolytic polishing. It is known that the surface after mechanical polishing is covered with a working-denatured layer of a few micrometers or smaller thickness, which is a Baleby layer as an agglomerate of amorphous extrafine particles or consisting of a region of crushed crystals formed by fine pulverization of metal crystals or a region of plastic deformation caused by working and this working denatured layer cannot be completely removed by mirror polishing alone with buffing not to exhibit the inherent properties so that it is necessary to undertake chemical polishing or, preferably, electrolytic polishing. Surface protrusions are selectively dissolved away by the electrolytic polishing along with dissolution on the whole surface so that the working-denatured layer can be completely removed. It is the most desirable treatment for decreasing occurrence of particles which may destroy the recorded information to give a smooth surface thereby. The electrolytic polishing solution is formulated with perchloric acid, sulfuric acid, hydrochloric acid, nitric acid, acetic acid, phosphoric acid, tartaric acid, citric acid, sodium hydroxide, sodium acetate, sodium thiocyanate, urea, cobalt nitrate, iron(III) nitrate and others by dilution with alcohols such as ethanol, propanol and the like, ethyleneglycol monobutyl ether, glycerine, pure water and others.

In the yokes for magnetic circuits of voice coil motors manufactured by the above described steps, it is no longer necessary by virtue of the inherently excellent corrosion resistance to provide a corrosion-resistant surface film on the surface of the yokes. To say inversely, it is not preferable to provide a coating of a corrosion-resistant surface film consisting of metals of a variety of alloys on these yokes by a variety of methods including electrolytic plating, electroless plating, ion plating and the like because of the possible increase in the costs of the yokes. In the iron alloy of the present invention, cost increase of the products can be prevented by having no surface films of a metal such as Ni, Cu, Sn, Au, Pt, Zn, Fe, Co, Al, Cr, Cd, Ag and the like or no surface film of an alloy containing 20% by mass or a larger amount of at least one kind of these metals.

The magnet used for constituting the magnetic circuit is a Nd/Fe/B-based high-performance magnet which is preferably after a conventional surface treatment for rust-proofing. The surface treatment for rust-proofing can be performed by electrolytic (electric) plating, electroless plating, CVD, PVD, IP (ion plating), vapor deposition, melt plating, dipping plating and others.

As is shown in Figures 1-3, the magnet is adhesively bonded to the yoke member. The magnet can be adhesively bonded to one of the yoke members or can be adhesively bonded to both of the upper and lower yoke members. Any of the magnets magnetized in monopolar, dipolar or quadripolar magnetization can be used. Further, practicable embodiments include a plurality of magnets each bonded to one of the yoke members or to both of the yoke members.

It is essential that, when the amounts of magnetic flux flows concentratedly within the opposite gaps between the yoke members and the adhesively bonded body of a yoke member to the magnet or within the opposite gap between the magnet-yoke member adhesively bonded bodies disposed up and down, the ratios of the leakage of the magnetic flux to the magnetic flux within the opposite gaps does not exceed 50000 ppm and the magnetic field strengths within the opposite gaps and within the yoke members are free from variations.

### Examples

In the following, the present invention is described in particular details by way of Examples and Comparative Examples but the present invention is never limited by the Examples described below.

### Examples 1 to 7.

Steel alloy blocks having the constituent compositions indicated in Examples 1 to 7 shown in Table 1 were melted and subjected to continuous casting to prepare an alloy block having a width of 200 mm, length of 500 mm and plate thickness of 50 mm. These alloy blocks were heated to 1200 °C under an atmosphere of the atmospheric air to start hot rolling at 950 °C or below and the hot rolling was finished when a cumulative press-down ratio of 60% was reached at 850 °C. Thereafter, cold rolling was conducted to give a 1.2 mm thick plate followed by finish annealing at 950 °C and electrolytic pickling.

The thus obtained steel plates were subjected to punching and bending works on a mechanical punching press machine into the form of yokes to obtain a two forms of yoke materials of the upper and lower yokes. The thus obtained yokes were subjected to barrel chamfering and electrolytic polishing.

A magnetic circuit was prepared by adhesively bonding a permanent magnet having a maximum energy product of 382kJ/m³ to the inward sides of the upper and lower yokes at the center positions of the yokes. The yoke materials as prepared were cut into about 4 mm square pieces which were subjected to the measurement of the saturation magnetic flux density on a vibration-sample magnetometer, of which the maximum magnetic field available was 1.9 MA/m.

The debris after punching of the yoke forms were worked to give ring samples having an outer diameter of 45 mm and an inner diameter of 33 mm. According to the method described in JIS C 2531 (1999), two of the rings were laid one on the other with insertion of a paper sheet therebetween and, after winding with an insulation tape, then were wound by 300 turns of a 0.5 mm diameter copper wire and 50 turns of a 0.26 mm diameter copper wire to serve as a magnetization coil and as a detectiong coil, respectively, to determine the maximum relative magnetic permeability and the coercive force by drawing a magnetic hysteresis curve on an automatic recorder of the direct-current magnetization characteristics, of which the maximum magnetic field available was ± 1.6 kA/m.

In order to examine the performance of the thus prepared magnetic circuit for voice coil motors, the total magnetic flux was measured within the gap of the magnetic circuit with a plane coil under use in actual magnetic recorders by using a magnetic flux meter (480 Fluxmeter, manufactured by Lakeshore). Further, measurements were made for the leak magnetic flux with a Hall element and a gaussmeter to record the maximum values at a position A which was10 mm apart toward the outside from the outside surface of the yoke member and at a position B which was the outermost position of the magnetic recording medium adjacent to the VCM magnetic circuit. The limit of the leak magnetic flux at each position was A<10 mT and B < 8 mT, respectively.

Further, the hardness was determined according to JIS Z 2245. Corrosion resistance was evaluated after keeping for 200 hours in an atmosphere under a relative humidity of 90% at a temperature of 80 °C to record the results as I for the absence of rusting, as II for discoloration and as III for the occurrence of rusting.

### Comparative Examples 1 to 4

As the Comparative Examples, measurements of the magnetic properties were conducted in the same manner as in Example 1 for a material of the commercially available SPCC product having a plate thickness of 1.2 mm (Comparative Example 1) and for the steel plates of 1.2 mm thickness obtained in the same manner as in Example 1 from the steel alloy blocks having the constituent compositions shown under Comparative Examples 1 to 4 in Table 1.

Table 2 shows the results of the measurements and evaluations in Examples 1 to 7 and Comparative Examples 1 to 4. The item of "per SPCC" in Table 2 indicates the percentage ratio relative to magnetic flux in Comparative Example 1 and the ratio of leak magnetic flux (A or B)/gap magnetic flux (ppm) indicates the proportions of the leak magnetic flux relative to the gap magnetic flux.

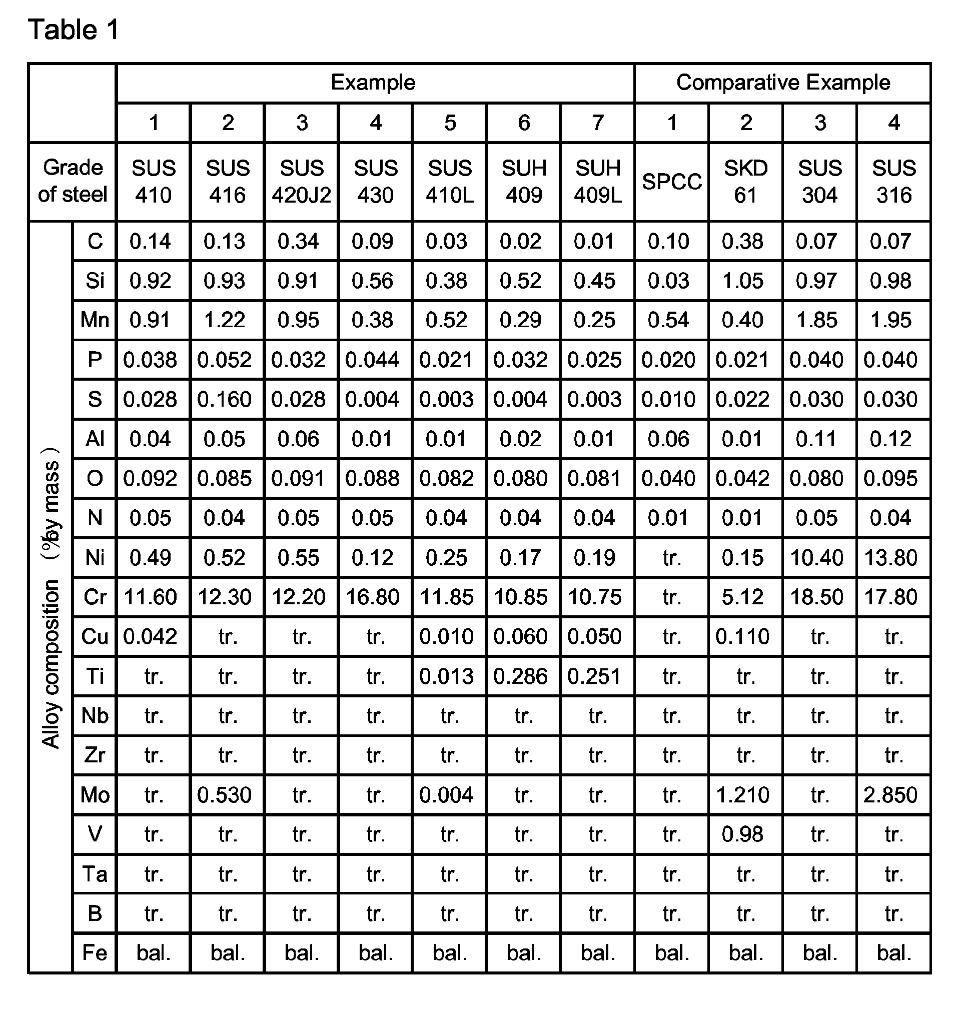

**Table 2**

| | Example | | | | | | | Comparative Example | | | |
|---|---|---|---|---|---|---|---|---|---|---|---|
| | 1 | 2 | 3 | 4 | 5 | 6 | 7 | 1 | 2 | 3 | 4 |
| Grade of steel | SUS 410 | SUS 416 | SUS 420J2 | SUS 430 | SUS 410L | SUH 409 | SUH 409L | SPCC | SKD 61 | SUS 304 | SUS 316 |
| Saturation magnetic flux density (T) | 1.661 | 1.602 | 1.648 | 1.663 | 1.793 | 1.787 | 1.805 | 2.080 | 1.772 | 0.062 | 0.061 |
| Maximum relative magnetic permeability | 701 | 640 | 430 | 694 | 867 | 1275 | 1495 | 2475 | 649 | 4 | 5 |
| Coercive force (A/m) | 484 | 662 | 910 | 480 | 393 | 172 | 150 | 420 | 764 | 470 | 661 |
| Magnetic flux in gap (T) | 0.576 | 0.571 | 0.575 | 0.576 | 0.587 | 0.586 | 0.588 | 0.611 | 0.587 | 0.230 | 0.225 |
| Per SPCC (%) | 94.3 | 93.5 | 94.1 | 94.3 | 96.1 | 95.9 | 96.2 | 100.0 | 96.1 | 37.6 | 36.8 |
| Leak magnetic flux A (mT) | 8.23 | 8.56 | 8.45 | 8.23 | 7.03 | 6.56 | 6.05 | 5.03 | 6.48 | 13.65 | 13.70 |
| Ratio of leak magnetic flux A/gap magnetic flux (ppm) | 14288 | 14991 | 14696 | 14288 | 11976 | 11195 | 10289 | 8232 | 11039 | 59348 | 60889 |
| Leak magnetic flux B (mT) | 7.70 | 7.51 | 8.30 | 7.70 | 8.00 | 6.98 | 6.53 | 5.65 | 6.55 | 8.40 | 8.50 |
| Ratio of leak magnetic flux B/gap magnetic flux (ppm) | 13368 | 13152 | 14435 | 13368 | 13629 | 11911 | 11105 | 9247 | 11158 | 36522 | 37778 |
| Rockwell hardness HRB | 87.8 | 91.7 | 92.9 | 94.8 | 80.4 | 77.2 | 71.2 | 57.1 | HRC 53 | 83.8 | 85.4 |
| Rusting condition | I | I | I | I | I | II | II | III | III | I | I |

### Examples 8 to 37

The steel blocks of the constituent compositions in Examples 8 to 37 indicated in Table 3 and Table 5 were melted and cast through the steps of electric furnace, converter, degassing and continuous casting to give slabs having a thickness of 200 mm. The molten iron were refined by the RH degassing and by the VOD method (vacuum-oxygen decarbonization method). The thus obtained 200 mm thick slabs were heated and soaked at 1100-1200 °C and rolled down on a hot rolling machine to have a plate thickness of about 10 mm at a finish temperature of 800-950 °C. After recrystallization annealing (800-1000 °C), electrolytic pickling and cold-rolling were conducted to give a plate thickness of about 4 mm. Thereafter, finish tempering at about 600-900 °C was conducted followed by pickling to give steel plates for testing.

Two kinds of yoke materials for the upper and lower yokes were obtained in the same manner as in Examples 1-7. A permanent magnet having a maximum energy product of 493 kJ/m³ was adhesively bonded to the insides of these upper and lower yokes at the center positions of the yokes to give a magnetic circuit.

The plate materials of the yokes thus prepared were subjected to the measurements of the magnetic properties in the same manner as in Examples 1-7. The experimental results above are shown in Table 4 and Table 6.

### Comparative Examples 5-28

As the Comparative Examples, a commercially available SPCC product having a plate thickness of 4 mm (Comparative Example 5) and the steel plates of a 4 mm thickness obtained in the same manner as in the Examples from steel alloy blocks having constituent compositions as given in Comparative Examples 6-28 shown in Table 7 and Table 9 were subjected to the measurements of the magnetic properties in the same manner as in Examples 1-7. The experimental results above are shown in Table 8 and Table 10.

The item of "per SPCC" in Tables 4, 6, 8 and 10 shows the respective percentage ratio relative to the magnetic flux in Comparative Example 5 and the ratios in the leak magnetic flux show the proportions (ppm) of the leak magnetic flux relative to the gap magnetic flux.

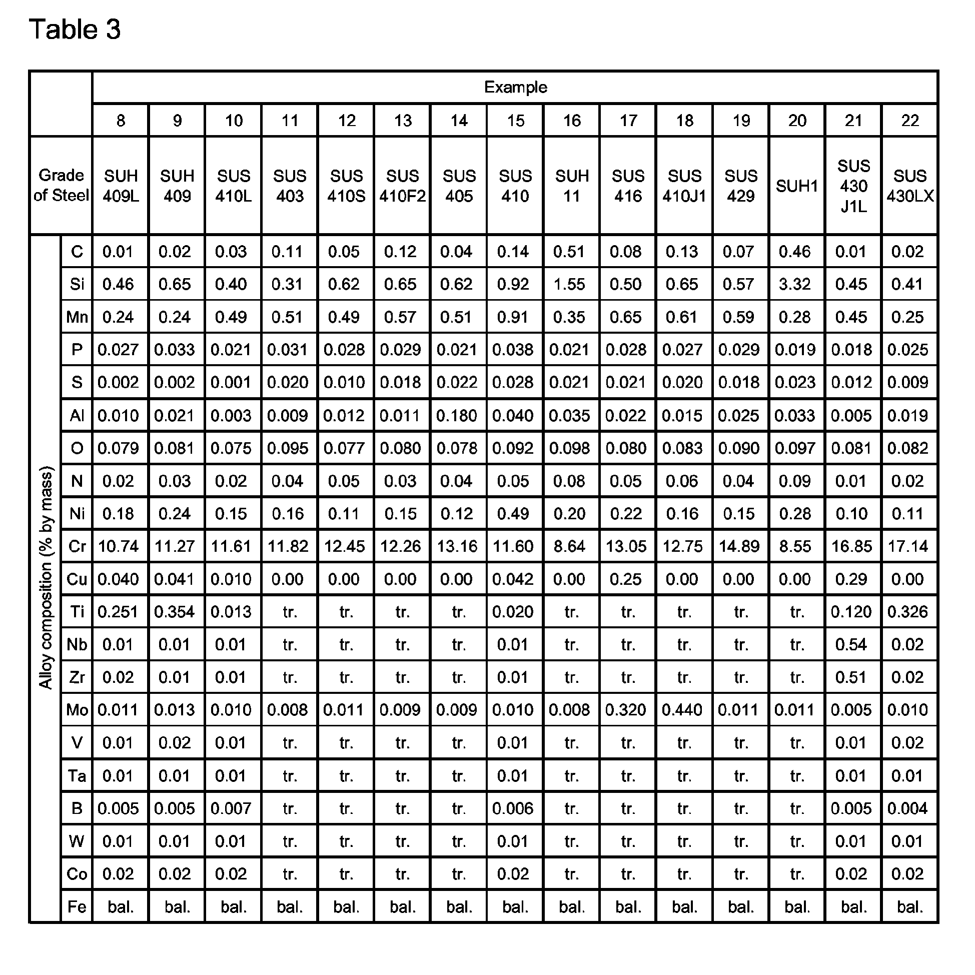

**Table 4**

| | Example | | | | | | | | | | | | | | |
|---|---|---|---|---|---|---|---|---|---|---|---|---|---|---|---|
| | 8 | 9 | 10 | 11 | 12 | 13 | 14 | 15 | 16 | 17 | 18 | 19 | 20 | 21 | 22 |
| Grade of steel | SUH 409L | SUH 409 | SUS 410L | SUS 403 | SUS 410S | SUS 410F2 | SUS 405 | SUS 410 | SUH 11 | SUS 416 | SUS 410J1 | SUS 429 | SUH 1 | SUS 430 | SUS 430LX |
| Saturation magnetic flux density (T) | 1.794 | 1.759 | 1.745 | 1.700 | 1.681 | 1.673 | 1.655 | 1.638 | 1.627 | 1.616 | 1.598 | 1.595 | 1.587 | 1.581 | 1.580 |
| Maximum relative magnetic permeability | 2220 | 1930 | 1520 | 1102 | 778 | 623 | 435 | 601 | 228 | 820 | 488 | 621 | 215 | 1650 | 1102 |
| Coercive force (A/m) | 150 | 172 | 393 | 612 | 455 | 503 | 298 | 484 | 385 | 661 | 556 | 459 | 423 | 201 | 235 |
| Magnetic flux in gap (T) | 0.498 | 0.489 | 0.485 | 0.472 | 0.467 | 0.465 | 0.460 | 0.455 | 0.452 | 0.449 | 0.444 | 0.443 | 0.441 | 0.439 | 0.439 |
| Per SPCC (%) | 82.9 | 82.3 | 82.3 | 80.1 | 79.3 | 78.9 | 78.0 | 77.2 | 76.7 | 76.2 | 75.3 | 75.2 | 74.8 | 74.5 | 74.5 |
| Leak magnetic flux A (mT) | 3.8 | 4.0 | 4.1 | 4.5 | 5.0 | 5.3 | 5.8 | 5.5 | 6.2 | 5.7 | 6.0 | 5.9 | 6.8 | 5.9 | 6.2 |
| Ratio of leak magnetic flux A/gap magnetic flux (ppm) | 7629 | 8188 | 8462 | 9534 | 10711 | 11405 | 12622 | 12088 | 13722 | 12701 | 13523 | 13323 | 15434 | 13437 | 14126 |
| Leak magnetic flux B (mT) | 3.1 | 3.2 | 3.1 | 3.5 | 3.6 | 3.8 | 4.5 | 3.9 | 4.8 | 4.2 | 4.9 | 5.1 | 5.2 | 4.7 | 4.9 |
| Ratio of leak magnetic flux B/gap magnetic flux (ppm) | 6223 | 6550 | 6398 | 7416 | 7712 | 8177 | 9793 | 8572 | 10623 | 9358 | 11044 | 11517 | 11802 | 10704 | 11164 |
| Rusting condition | II | II | I | I | I | I | I | II | I | I | I | I | II | I | I |

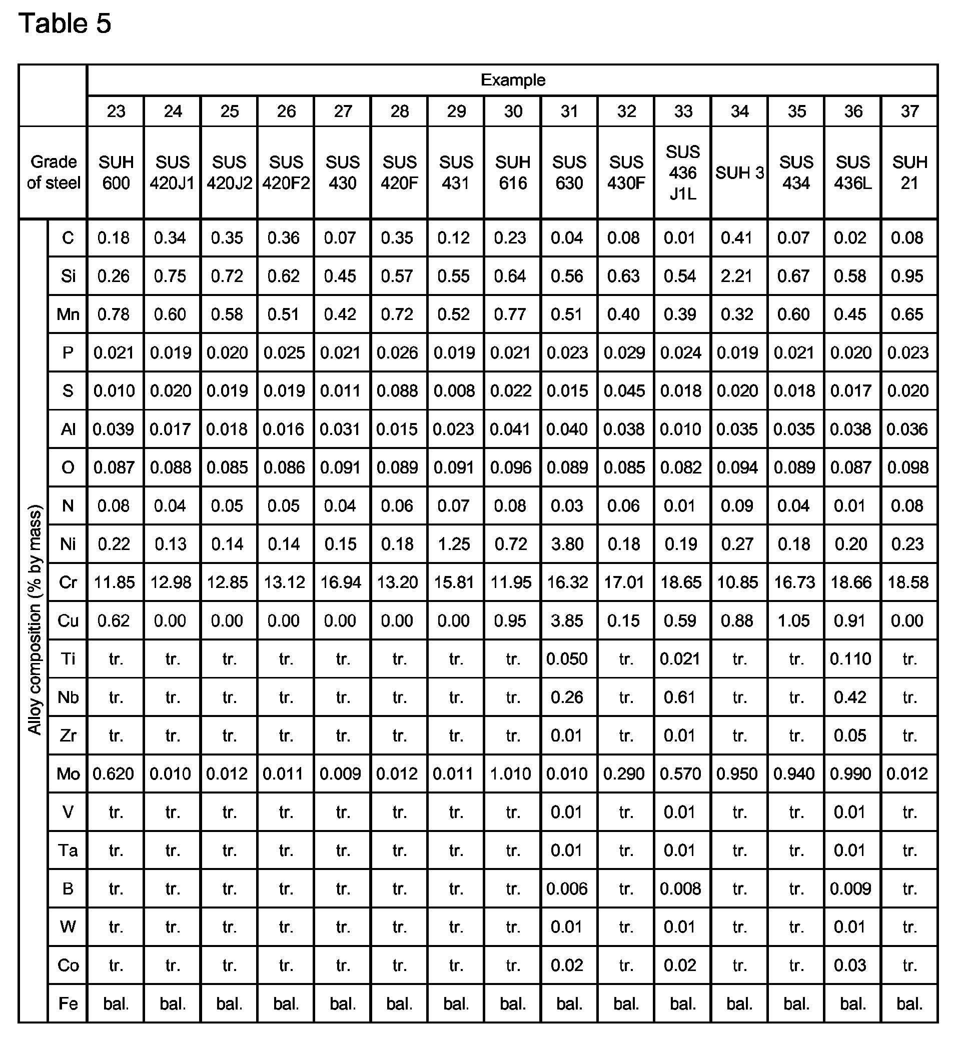

**Table 6**

| | Example | | | | | | | | | | | | | | |
|---|---|---|---|---|---|---|---|---|---|---|---|---|---|---|---|
| | 23 | 24 | 25 | 26 | 27 | 28 | 29 | 30 | 31 | 32 | 33 | 34 | 35 | 36 | 37 |
| Grade of steel | SUH 600 | SUS 420J1 | SUS 420J2 | SUS 420F2 | SUS 430 | SUS 420F | SUS 431 | SUH 616 | SUS 630 | SUS 430F | SUS 436J1L | SUH 3 | SUS 434 | SUS 436L | SUH 21 |
| Saturation magnetic flux density (T) | 1.572 | 1.571 | 1.567 | 1.564 | 1.543 | 1.543 | 1.534 | 1.509 | 1.507 | 1.496 | 1.475 | 1.474 | 1.443 | 1.428 | 1.424 |
| Maximum relative magnetic permeability | 550 | 458 | 423 | 435 | 688 | 296 | 365 | 321 | 712 | 267 | 1319 | 201 | 398 | 850 | 461 |
| Coercive force (A/m) | 1056 | 943 | 1065 | 1154 | 675 | 1516 | 992 | 1215 | 565 | 718 | 656 | 1980 | 801 | 671 | 821 |
| Magnetic flux in gap (T) | 0.437 | 0.436 | 0.435 | 0.434 | 0.429 | 0.429 | 0.426 | 0.419 | 0.419 | 0.415 | 0.410 | 0.409 | 0.401 | 0.397 | 0.396 |
| Per SPCC | 74.1 | 74.1 | 73.9 | 73.7 | 72.8 | 72.8 | 72.3 | 71.1 | 71.1 | 70.5 | 69.6 | 69.5 | 68.0 | 67.3 | 67.2 |
| Leak magnetic flux A (mT) | 6.4 | 6.7 | 7.0 | 7.2 | 7.4 | 8.2 | 7.9 | 8.0 | 7.7 | 9.0 | 7.5 | 9.1 | 8.7 | 9.6 | 9.8 |
| Ratio of leak magnetic flux A/gap magnetic flux (ppm) | 14657 | 15360 | 16083 | 16577 | 17266 | 19134 | 18541 | 19095 | 18397 | 21667 | 18308 | 22238 | 21714 | 24204 | 24776 |
| Leak magnetic flux B (mT) | 5.1 | 5.3 | 5.5 | 5.6 | 5.5 | 6.1 | 6.2 | 6.0 | 5.9 | 7.2 | 6.1 | 8.1 | 8.2 | 7.8 | 8.5 |
| Ratio of leak magnetic flux B/gap magnetic flux (ppm) | 11680 | 12150 | 12637 | 12893 | 12833 | 14234 | 14551 | 14321 | 14096 | 17333 | 14891 | 19795 | 20466 | 19666 | 21489 |
| Rusting condition | I | I | I | I | I | I | I | I | I | I | I | I | I | I | I |

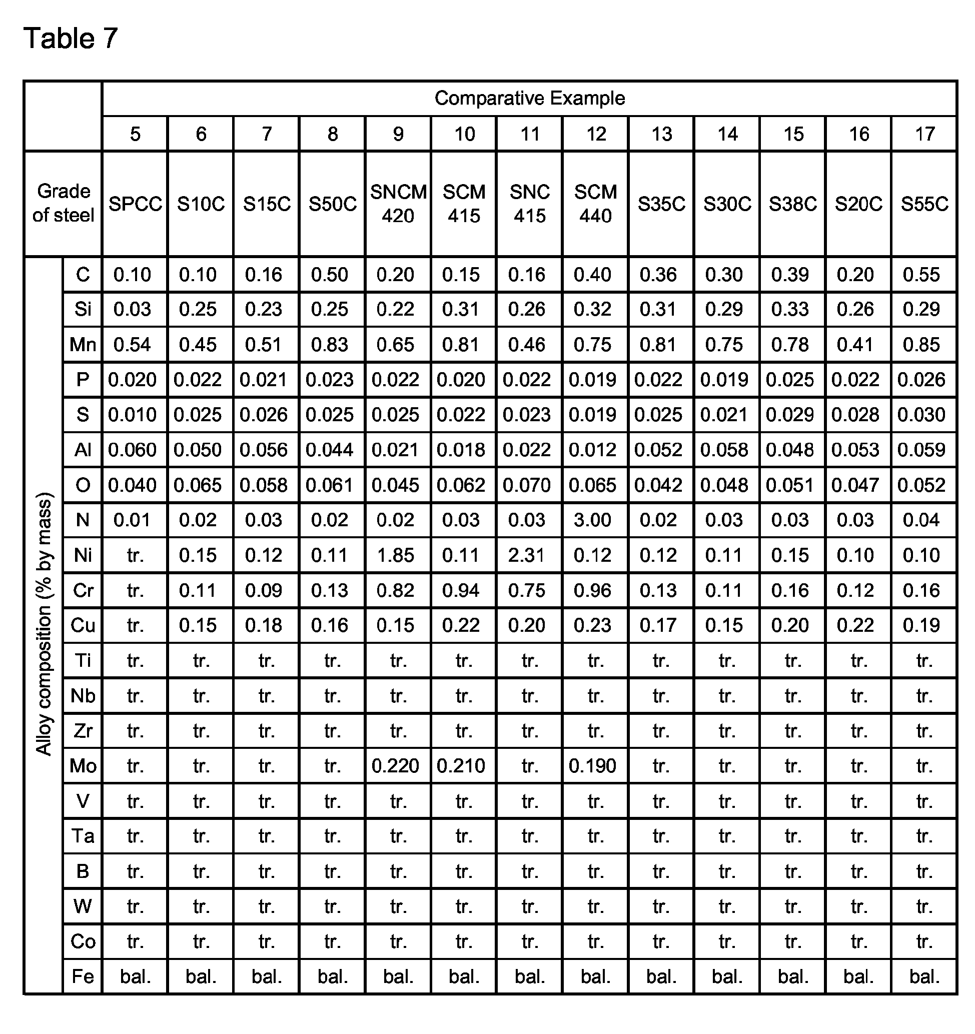

**Table 8**

| | Comparative Example | | | | | | | | | | | | |
|---|---|---|---|---|---|---|---|---|---|---|---|---|---|
| | 5 | 6 | 7 | 8 | 9 | 10 | 11 | 12 | 13 | 14 | 15 | 16 | 17 |
| Grade of steel | SPCC | S10C | S15C | S50C | SNCM 420 | SCM 415 | SNC 415 | SCM 440 | S35C | S30C | S38C | S20C | S55C |
| Saturation magnetic flux density (T) | 2,121 | 2.045 | 2.045 | 1.958 | 1.894 | 1.887 | 1.886 | 1.884 | 1.860 | 1.822 | 1.811 | 1.804 | 1.796 |
| Maximum relative magnetic permeability | 2475 | 2437 | 2099 | 689 | 626 | 1108 | 1175 | 291 | 1170 | 1201 | 1201 | 1425 | 536 |
| Coercive force (A/m) | 420 | 285 | 284 | 720 | 793 | 576 | 444 | 1370 | 506 | 502 | 502 | 447 | 797 |
| Magnetic flux in gap (T) | 0.589 | 0.568 | 0.568 | 0.544 | 0.526 | 0.524 | 0.524 | 0.523 | 0.517 | 0.506 | 0.503 | 0.501 | 0.499 |
| Per SPCC (%) | 100.0 | 96.4 | 96.4 | 92.3 | 89.3 | 89.0 | 88.9 | 88.8 | 87.7 | 85.9 | 85.4 | 85.1 | 84.7 |
| Leak magnetic flux A (mT) | 3.5 | 3.8 | 4.0 | 4.5 | 5.3 | 5.2 | 5.8 | 6.5 | 5.7 | 6.0 | 6.2 | 6.1 | 7.0 |
| Ratio of leak magnetic flux A/gap magnetic flux (ppm) | 5942 | 6691 | 7043 | 8276 | 10077 | 9923 | 11074 | 12424 | 11035 | 11858 | 12328 | 12176 | 14035 |
| Leak magnetic flux B (mT) | 2.1 | 2.1 | 2.2 | 4.0 | 4.1 | 3.8 | 3.7 | 4.8 | 4.0 | 4.1 | 4.1 | 3.9 | 4.5 |
| Ratio of leak magnetic flux B/gap magnetic flux (ppm) | 3565 | 3698 | 3874 | 7356 | 7795 | 7252 | 7064 | 9174 | 7744 | 8103 | 8152 | 7785 | 9022 |
| Rusting condition | III | III | III | III | III | III | III | III | III | III | III | III | III |

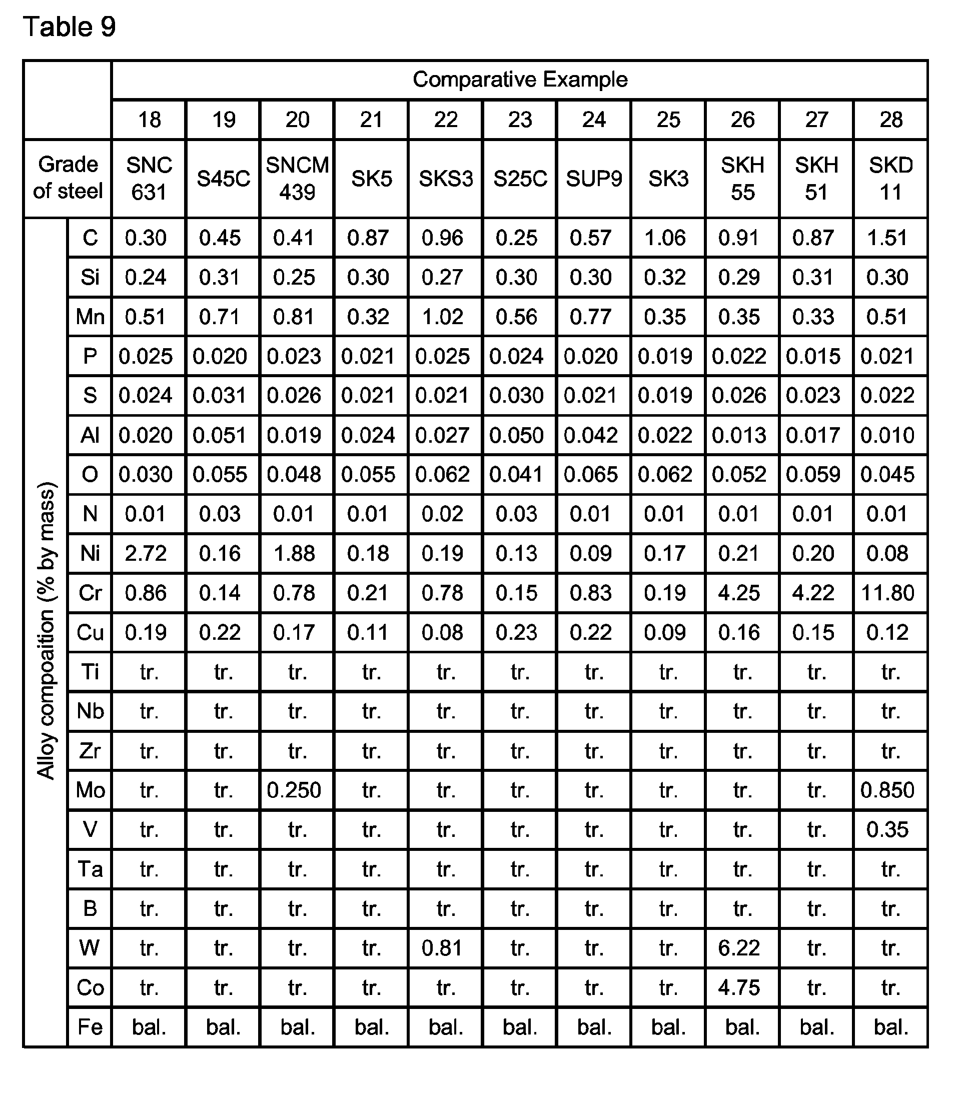

**Table 10**

| | Comparative Example | | | | | | | | | | |
|---|---|---|---|---|---|---|---|---|---|---|---|
| | 18 | 19 | 20 | 21 | 22 | 23 | 24 | 25 | 26 | 27 | 28 |
| Grade of steel | SNC 631 | S45C | SNCM 439 | SK5 | SKS3 | S25C | SUP9 | SK3 | SKH 55 | SKH 51 | SKD 11 |
| Saturation magnetic flux density (T) | 1.784 | 1.781 | 1.706 | 1.688 | 1.683 | 1.677 | 1.607 | 1.593 | 1.500 | 1.389 | 1.361 |
| Maximum relative magnetic permeability | 530 | 655 | 252 | 905 | 533 | 482 | 183 | 527 | 333 | 346 | 351 |
| Coercive force (A/m) | 936 | 703 | 1486 | 650 | 965 | 404 | 1724 | 936 | 1202 | 1073 | 1043 |
| Magnetic flux in gap (T) | 0.495 | 0.495 | 0.474 | 0.469 | 0.467 | 0.466 | 0.446 | 0.442 | 0.417 | 0.386 | 0.378 |
| Per SPCC (%) | 84.1 | 84.0 | 80.4 | 79.6 | 79.4 | 79.1 | 75.8 | 75.1 | 70.7 | 65.5 | 64.2 |
| Leak magnetic flux A (mT) | 7.2 | 7.5 | 8.2 | 7.9 | 8.7 | 8.8 | 9.5 | 9.2 | 9.8 | 11.5 | 12.2 |
| Ratio of leak magnetic flux A/gap magnetic flux (ppm) | 14533 | 15164 | 17308 | 16853 | 18615 | 18896 | 21288 | 20796 | 23526 | 29813 | 32279 |
| Leak magnetic flux B (mT) | 4.7 | 4.8 | 5.4 | 5.7 | 6.0 | 6.5 | 7.5 | 7.2 | 7.9 | 8.3 | 8.5 |
| Ratio of leak magnetic flux B/gap magnetic flux (ppm) | 9487 | 9705 | 11398 | 12160 | 12838 | 13957 | 16806 | 16275 | 18965 | 21518 | 22489 |
| Rusting condition | III | III | III | III | III | III | III | III | III | III | III |

It is understood from Tables 1 to 10 that each of the steel plates having the composition of Examples has an increased relative magnetic permeability, a decreased coercive force and a total magnetic flux in the gap of the magnetic circuit comparable to that of the SPCC. It is understood, in addition, that no noticeable rusting was found without occurrence of particle contamination.

### Industrial Utilizability

As is described above, improvements can be accomplished according to the present invention in the magnetic properties and corrosion resistance of a yoke material having a thickness of 0.1 mm to 5 mm so that the magnetic flux introduced from a magnet into the magnetic circuit constituted can be efficiently utilized to maintain the magnetic flux density within the opposite gaps under reduced variations. It is now possible to provide inexpensive and highly corrosion-resistant magnetic circuits of a magnetic recording apparatus or an optical pickup device, as well as a voice coil motor and an actuator without necessitating formation of a corrosion-resistant metallic surface film by merely undertaking deburring and chamfering followed by finishing by chemical polishing and electrolytic polishing.

### Brief description of drawing

Figure 1: An explanatory perspective illustration of the VCM magnetic circuit as a first embodiment of the present invention.
Figure 2: An explanatory perspective illustration of the VCM magnetic circuit in the form connected to one of the upper and lower yokes by bending connection as a second embodiment of the present invention.
Figure 3: An explanatory perspective illustration of a VCM magnetic circuit as a third embodiment of the present invention.

## Claims

1. A magnetic circuit which is constituted of yoke members having no corrosion-resistant metallic surface films prepared from a plate material of 0.1 to 5 mm thickness and having a saturation magnetic flux density of 1.3 to 2.3 Tesla, a maximum relative magnetic permeability of 200 to 22000 and a coercive force of 20 to 2000 A/m as formed from a plate material of a martensite-type stainless steel, ferrite-type stainless steel, precipitation-hardening stainless steel or Cr-type heat-resistant steel containing 0.0001 to 2% by mass of C, 0.0001 to 5% by mass of Si, 0.001 to 2% by mass of Mn, 0.0001 to 0.1 % by mass of P, 0.0001 to 0.2% by mass of S, 0.0001 to 5% by mass of Al, 0.001 to 0.1% by mass of O, 0.0001 to 0.1% by mass of N, 0.0001 to 1% by mass of Ni and 10.5 to 30% by mass of Cr, with further addition of at least one alloying element selected from the group consisting of Ti, Co, Cu, Zr, Nb, V, Mo, W, Ta and B, the total amount of said alloying elements being 0.0001 to 5% by mass and the balance excepting the additive and alloying elements and unavoidable impurity elements being Fe, and an Nd/Fe/B-based magnet or magnets after a surface treatment, one, two or four of the said Nd/Fe/B-based magnets being magnetized in monopolar, dipolar or quadripolar and adhesively bonded to the yoke members to make an adhesion-bonded body of the magnet and yoke members, the adhesion-bonded body or a pair of adhesion-bonded bodies of the magnet and yoke members with the same number of the magnets being oppositely positioned, and the magnetic flux flowing concentratedly within the opposite gap formed between the magnet-yoke member or within the opposite gap formed between the pair of the adhesion-bonded bodies of the magnet and yoke member and inside of the yoke members, the ratios of the leak magnetic flux to the magnetic flux within the opposite gaps not exceeding 50000 ppm and the magnetic field strengths within the opposite gaps and in the inside of the yoke members being free from variations.

2. A voice coil motor or an actuator in which the magnetic circuit described in Claim 1 is used.
